# EUROPÄISCHE PATENTANMELDUNG

(11) **EP 0 732 494 A2**
(43) Veröffentlichungstag der Anmeldung: **18.09.1996**
(21) Anmeldenummer: 96102067.4
(22) Anmeldetag: 13.02.1996
(51) Int. Cl.: F02K 9/64

(54) **Kühlung von Triebwerkswänden**

(30) Priorität: 17.02.1995 DE 19505357
(71) Anmelder: Daimler-Benz Aerospace Aktiengesellschaft, D-81663 München (DE)
(72) Erfinder: Schmidt, Günther, Prof. Dr.-Ing., D-82024 Taufkirchen (DE); Popp, Michael, Dr.-Ing., D-85649 Brunnthal (DE)

(57) **Zusammenfassung**

Kühlung von Triebwerkswänden mit Treibstoff, wobei die Wände eine Struktur besitzen, welche eine im Betrieb heißgasbeaufschlagte Innenwand, eine kältere Außenwand sowie eine Vielzahl von die Wände verbindenden Stegen aufweist, die den dort vorhandenen Hohlraum in eine Vielzahl von Kühlkanälen aufteilen.

Der Treibstoff wird in kaltem Zustand in die Wandstruktur eingeleitet, unter Wärmeaufnahme über die Innenwand durch die Kühlkanäle gefördert und anschließend schuberzeugend genutzt.

Die "kalte" Außenwand der treibstoffdurchströmten Wandstruktur wird im Betrieb von außen mit einem dem Triebwerk entnommenen Heißfluidstrom beaufschlagt und dadurch thermisch gedehnt, oder ihre thermische Konraktion wird vermindert.

## Beschreibung

Die Erfindung betrifft ein Verfahren zur Kühlung von Triebwerkswänden mit Treibstoff, gemäß dem Oberbegriff des Patentanspruches 1, sowie eine Wandstruktur zur Durchführung dieses Verfahrens, gemäß dem Oberbegriff des Patentanspruches 3.

Eine entsprechende, treibstoffgekühlte Wandstruktur für Brennkammern und Schubdüsen von Flüssigkeitsraketentriebwerken ist beispielsweise aus der DE-PS 17 51 691 bekannt. Bei der dort beschriebenen Wandstruktur sind die Kühlkanäle in einen einstückigen Grundkörper aus gut-wärmeleitendem Material, vorzugsweise Kupfer, eingearbeitet, so daß die heißgasseitige Innenwand und die radialen Stege zwischen den Kühlkanälen integral verbunden sind und aus dem selben Material (Kup-fer) bestehen. Die Kühlkanäle werden von außen mit einem aufgalvani-sierten, relativ dickwandigen Druckmantel aus hochfestem, schlechtwär-meleitendem Material, vorzugsweise Nickel, verschlossen, wobei der äußere Druckmantel über die Stege im wesentlichen auch die Belastungen aus dem Brennkammer- bzw. Düseninnendruck aufnimmt. Aus Gründen einer besseren Verbindung zwischen Grundkörper und Druckmantel ist auf die Stege von außen eine dünnwandige Zwischenschicht aus dem selben Material wie der Grundkörper aufgalvanisiert.

Im Betrieb einer derartigen Wandstrukur spielen sich folgende Vorgänge ab: Die Kühlkanäle werden z.B. von 30 bis 100 K kaltem Wasserstoff durchströmt, wobei die tragende Außenwand etwa diese Temperatur annimmt und im Durchmesser sogar noch schrumpft. Dieser Effekt wird noch verstärkt durch Schichtungseffekte im Kühlmittel, welches sich am inneren Kanalgrund, d.h. an der Innenwand, erwärmt, in den Außenzonen aber relativ kalt bleibt. Die für einen guten Wärmeübergang zum Kühlmittel dünn ausgeführte Innenwand erwärmt sich unter der thermischen Belastung des Brennraumes bzw. der Düse durch die heißen Brenngase, möchte sich ausdehnen und wird daran aber durch den Gegendruck der kalten, steifen Außenwand über die Stege gehindert. Dadurch fließt Material der Innenwand in Richtung der Übergangsbereiche zu den Stegen. Dieser Effekt ist umso stärker, je länger die Brennzeit dauert. Er kommt erst zum Stehen, wenn die thermisch induzierten Spannungen sich bis an die Elastizitätsgrenze abgebaut haben. Somit nimmt die radiale Wanddicke der ohnehin dünnen Innenwand etwa in der Mitte zwischen den Stegen weiter ab.

Bei Brennschluß des Triebwerkes wird aus Sicherheitsgründen zunächst die Verbrennung im Brennraum durch Schließen der Sauerstoffzufuhr beendet, der auch die Kühlkanäle durchströmende Wasserstoff fließt dagegen kurzzeitig nach. Dabei wird die dünne Innenwand wegen ihrer geringen Wärmekapazität sofort stark abgekühlt, was nun zu einer hohen Zugbelastung in dieser führt. Zumindest nach mehrmaligem Start und längeren Brennzeiten kann dies relativ bald eine Rißbildung in den geschwächten Mittelzonen der Innenwand zur Folge haben, welche die Funktion der Brennkammer bzw. Düse akut gefährdet und bis zu ihrer vollständigen Zerstörung führen kann.

Angesichts dieser gravierenden Nachteile der bekannten Kühlverfahren und ihrer zugehörigen Wandstrukturen besteht die Aufgabe der Erfindung darin, ein Kühlverfahren einschließlich einer dafür geeigneten Wandstrukur anzugeben, welches durch erhebliche Reduzierung der thermisch induzierten, mechanischen Belastungen eine signifikante Erhöhung der Triebwerkslebensdauer bzw. eine Erhöhung des spezifischen Triebwerksimpulses ermöglicht.

Diese Aufgabe wird verfahrensseitig durch die in Patentannspruch 1, vorrichtungsseitig durch die in Patentanspruch 3 genannten Merkmale gelöst.

Erfindungsgemäß wird die "kalte" Außenwand der Wandstruktur mit einem dem Triebwerk entnommenen, heißen Fluidstrom von außen aufgeheizt, wodurch sich die Differenz zwischen der mittleren Temperatur der Innenwand und der mittleren Temperatur der Außenwand erheblich reduzieren läßt im Vergleich zu bekannten Kühlverfahren und Wandstrukturen mit kalter, unbeheizter Außenwand. Dadurch werden auch die thermisch induzierten Spannungen in der Wandstruktur wesentlich kleiner, wodurch sich deren Lebensdauer um ein Vielfaches erhöhen läßt.

Erfindungsgemäß wird dafür der übliche Wandaufbau in der Weise geändert, daß auf die sogenannte Außenwand - gemeint ist die die Kühlstruktur zur Triebwerksaußenseite hin begrenzende Wand - eine zusätzliche Heizstruktur aufgebracht wird, bestehend aus einem äußeren, stabilen Deckmantel und einer Vielzahl von Stegen zwischen Außenwand und Deckmantel. Die Stege teilen die hohle Heizstruktur in eine Vielzahl von Heizkanälen ein, deren Abdichtung seitlich gegeneinander nicht hermetisch sein muß. Dadurch reduzieren sich beispielsweise auch die fertigungstechnischen Anforderungen im Kontakt- bzw. Verbindungsbereich Steg/Deckmantel.

Das durch die Heizkanäle geförderte, dem Triebwerk entnommene Heißfluid kann sowohl ein durch Verbrennung erzeugtes Heißgas als auch ein durch Wärmetausch erhitztes Fluid, z.B. heißer Treibstoff, sein. Aufgrund des relativ geringen erforderlichen Massendurchsatzes an wärmeabgebendem Heißfluid sowie aufgrund der Tatsache, daß die abgegebene Wärme weitestgehend im Triebwerksprozeß verbleibt, treten praktisch keine Leistungsverluste, z.B. in Form von Schubeinbußen, auf. Im Gegenteil ermöglicht die Erfindung sogar eine Erhöhung des Brennkammerdruckes und damit des Schubes infolge der gesteigerten "Ermüdungsfestigkeit" der Wandstruktur.

Die Unteransprüche 2, 4 und 5 enthalten bevorzugte Ausgestaltungen des Verfahrens nach Anspruch 1 bzw. der Wandstruktur nach Anspruch 3.

Die Erfindung wird anschließend anhand der Zeichnungen noch näher erläutert. Dabei zeigen in vereinfachter bzw. schematischer Darstellung:
- Fig. 1: einen Teilquerschnitt durch die Wandstruktur eines mit kryogenem Treibstoff gekühlten Raketentriebwerkes,
- Fig. 2: einen schematischen Halblängsschnitt durch Brennkammer und Schubdüse eines Raketentriebwerkes sowie den zugehörigen Kühlmittelfluß.

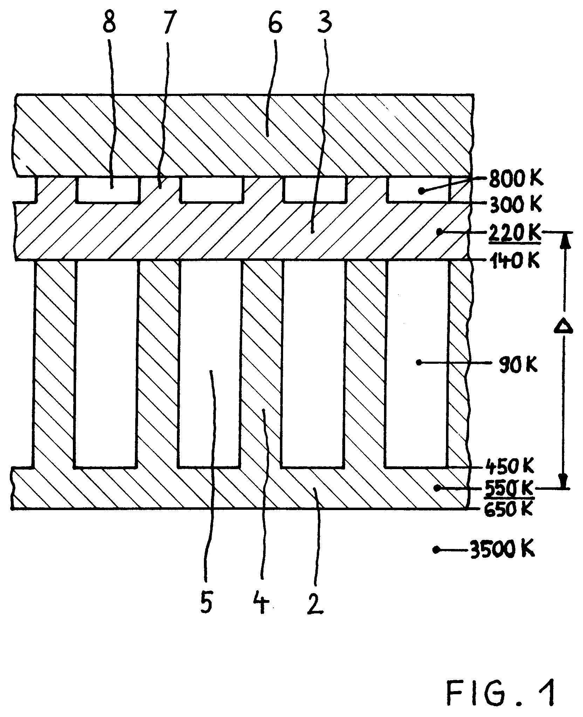

Die Wandstruktur 1 in Fig. 1 ist der Einfachheit halber so dargestellt, als ob ihre Wandelemente, d.h. die Innenwand 2, die Außenwand 3 und der Deckmantel 6, jeweils ebenflächige Gebilde wären. Dem Fachmann ist klar, daß deren Konturen in Wirklichkeit der Querschnittsform des Triebwerkes angepaßt sind. In den meisten Fällen wird es sich somit um Kreiskonturen mit jeweils konstanten Krümmungsradien handeln. Besonders bei großen Triebwerken ist die Wandstruktur in Relation zu den Krümmungsradien ihrer Wandelemente relativ dünn, so daß sich bereits wieder ähnliche geometrische Verhältnisse ergeben wie in Fig. 1.

Der gewählten Darstellung gemäß befindet sich das heiße Triebwerksinnere unterhalb der Innenwand 2, die in Relation dazu kalte, sich jeweils auf Umgebungstemperatur befindende Triebwerksaußenseite oberhalb des Deckmantels 6.

Der von der Innenwand 2, den Stegen 4 und der - hier bewußt so genannten - Außenwand 3 gebildete, die von kaltem Treibstoff durchströmten Kühlkanäle aufnehmende Innenbereich der Wandstruktur 1 ist vom Aufbau her bekannt und hat sich seit vielen Jahren in Triebwerken bewährt. Man kann diesen Bereich der Wandstruktur 1 auch als die eigentliche Kühlstruktur bezeichnen.

Erfindungsgemäß ist der Wandaufbau nach außen (hier: oben) um weitere Stege 7, heißfluiddurchströmte Heizkanäle 8 und einen direkt mit der Umgebung in Kontakt stehenden Deckmantel 6 erweitert. Diesen Bereich der Wandstruktur kann man als Heizstruktur bezeichnen, wobei die sogenannte Außenwand 3 als mit beiden Fluiden (kalt/heiß) in Kontakt stehende Trennwand sowohl der Kühlstruktur als auch der Heizstruktur zugehört.

Rechts neben der Schnittdarstellung sind beispielhalte Werte für die örtlich zu erwartenden Temperaturen angegeben. Die höchste Temperatur von 3500 K herrscht im Inneren des Triebwerkes bei zumindest weitgehend stöchiometrischer Verbrennung der Treibstoffe. Die Temperatur des als Kühlmittel durch die Kühlkanäle 6 gepumpten, noch tiefkalten Treibstoffes (z.B. LH₂) beträgt demgegenüber nur 90 K. Das zum Zweck des Spannungsabbaues durch die Heizkanäle 8 geförderte Heißfluid liegt temperaturmäßig wieder wesentlich höher, nämlich bei 800 K.

Die das heiße und kalte Fluid trennende Außenwand 3 wird dadurch auf eine mittlere Temperatur von 220 K gebracht (Wert unterstrichen). Die mittlere Temperatur der Innenwand 2 liegt bei 550 K (ebenfalls unterstrichen). Somit beträgt die Differenz Δ der mittleren Temperaturen der Wände 2 und 3 330 K (550 K - 220 K).

Bei einem Wandaufbau ohne die erfindungsgemäße, äußere Heizstruktur läge die mittlere Temperatur der Außenwand bei 90 K, d.h. der Temperatur des Kühlfluids. Bei unveränderter mittlerer Temperatur der Innenwand von 550 K würde die Temperaturdifferenz Δ somit 460 K betragen und zu wesentlich höheren Termospannungen führen. Die bereits geschilderten Nachteile (Maerialfließen, Rißbildung etc.) wären die bekannte Folge.

Der für die erfindungsgemäße Kombination aus Kühl- und Heizverfahren benötigte, mengenmäßig eher kleine Heißfluidstrom wird im Triebwerk selbst an geeigneter Stelle erzeugt bzw. entnommen. Das Heißfluid kann sein:
1. ein Verbrennungsabgas,
2. ein durch Wärmeübertragung stark erhitztes, unverbranntes Kühlfluid (Treibstoff).

In Fall 1 kann das Heißfluid auf folgende Weise bereitgestellt werden:
a) durch Abzapfung aus der Brennkammer (Haupt-Brennkammer) in der Nähe des Einspritzkopfes,
b) bei Nebenstromtriebwerken durch Verwendung des Abgases der Turbinen,
c) bei Hauptstromtriebwerken durch Abzweigung eines geringen Anteils der Turbinenabgase, wobei die Strömungsrichtung der Heizgase in der Wandstruktur in oder gegen die Strömungsrichtung in der Brennkammer erfolgen kann (Gleich- oder Gegenstrom).

Bei allen drei Möglichkeiten wird das Heißfluid nach Durchströmen der Wanstruktur an geeigneter Stelle dem Haupt-Abgasstrom des Triebwerkes beigemischt. Bei niedrigerem Druckniveau des Heißfluids nach erfolgter Wärmeabgabe (Fall a) und b)) wird diese Zumischung eher im Düsenbereich (geringerer Abgasdruck) erfolgen, bei höherem Druckniveau des Heißfluids eher in der Brennkammer und in der Nähe des Einspritzkopfes (Fall c)). Diese Möglichkeiten sind für den Fachmann leicht verständlich und deshalb nicht gesondert dargestellt.

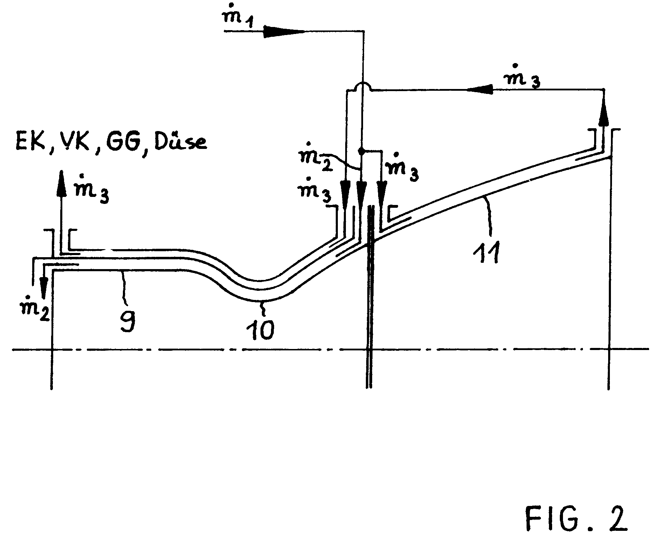

In Fig. 2 ist ein Beispiel zu Fall 2, das heißt zur Heißfluidbereitstellung durch Wärmeübertragung, dargestellt. In diesem schematischen Halb-Längsschnitt durch ein fluidgekühltes Raketentriebwerk sind die Brennkammer 9 mit dem Düsenhals 10 und dem vorderen Teil der Schubdüse sowie die sich als eigenes Bauelement anschließende Expansionsdüse 11 zu erkennen.

Die Wandstruktur der lebensdauermäßig eher unkritischen Expansionsdüse 11 ist in bekannter Weise nur "einstöckig" ausgeführt und wird somit nur gekühlt.

Die Wandstruktur der kritischeren Brennkammer 9 einschließlich des Düsenhalses 10 und des vorderen Düsenbereiches ist erfindungsgemäß "doppelstöckig" aufgebaut und wird somit gekühlt und geheizt.

Der ankommende, tiefkalte und unter hohem Druck stehende Hauptkühlstrom ist mit 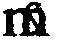 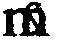 ₁ bezeichnet. Dieser wird in zwei Teilströme 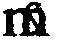 ₂ und 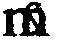 ₃ aufgespalten, wobei der erste durch den inneren Bereich der "doppel-stöckigen" Wandstruktur zum Einspritzkopf, der zweite durch die einfache Wandstruktur der Expansionsdüse 11 zu deren austrittsseitigem Ende geführt wird. Der nunmehr bereits stark erhitzte Fluidstrom 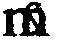 ₃ wird vom Expansionsdüsenende zum stromabwärtigen Ende des vorderen Düsenteils geleitet und dort in die äußere Schicht der "doppelstöckigen" Wandstruktur eingebracht. In dieser strömt er unter Wärmeabgabe bis in den Bereich des Einspritzkopfes der Brennkammer 9 (Gegenstrom). Alternativ kann 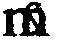 ₃ auch im Gleichstrom-verfahren vom Einspritzkopf zur Düse durch die äußere Schicht der Wand-struktur geleitet werden. Anschließend, das heißt nach erfolgter Wärmeabgabe an die Wandstruktur, wird 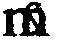 ₃ in den Haupt-Massenstrom des Triebwerkes eingebracht und zwar alter-nativ in den Einspritzkopf (EK), in die/eine Vorkam-mer (VK, bei Hauptstromtriebwerk), in den/einen Gasgenerator (GG, bei Nebenstromtriebwerk) oder in die Düse.

Die durch die Erfindung erreichbare Verminderung der Temperaturdifferenz um mindestens 30 % (Rechenbeispiel) zwischen Innen- und Außenwand der eigentlichen Kühlstruktur erhöht die Lebensdauer einer hochbelasteten Rakeenbrennkammer auf mehr als das Dreifache der mit bekannter Bauweise erreichbaren Werte.

Alternativ dazu kann bei gleichbleibender Lebensdauer die innere Wandtemperatur gesteigert, und damit der Kühlungs-Druckverlust deutlich ver-mindert werden (auf ca. 50 %). Dadurch kann der Pumpendruck niedriger gewählt werden, oder die Brennkammerdrücke erhöht werden, was beides letztlich den spezifischen Impuls des Triebwerkes erhöht.

## Patentansprüche

1. Verfahren zur Kühlung von Triebwerkswänden mit Treibstoff, wobei die Wände eine Struktur besitzen, welche eine im Betrieb heißgasbeaufschlagte Innenwand, eine im Betrieb kältere Außenwand sowie eine Vielzähl von die Innenwand mit der Außenwand verbindenden Stegen aufweist, die den dort vorhandenen Hohlraum in eine Vielzahl von Kühlkanälen aufteilen, insbesondere zur Kühlung der Brennkammer- und Schubdüsenwände von Raketentriebwerken mit kryogenem Wasserstoff oder kryogenem Sauerstoff, wobei der Treibstoff in kaltem Zustand in die Wandstruktur eingeleitet, unter Wärmeaufnahme über die Innenwand durch die Kühlkanäle gefördert und anschließend schuberzeugend genutzt wird, dadurch gekennzeichnet, daß die "kalte" Außenwand (3) der treibstoffdurchströmten Wandstruktur im Betrieb von außen mit einem dem Triebwerk entnommenen, in Relation zum Triebwerksdurchsatz kleinen Heißfluidstrom (ṁ₃) beaufschlagt und dadurch thermisch gedehnt wird, oder ihre thermische Kontraktion vermindert wird.

2. Verfahren nach Anspruch 1, zur Kühlung der Brennkammer- und/oder Schubdüsenwände von Raketentriebwerken, dadurch gekennzeichnet, daß der für die Beaufschlagung der treibstoffdurchströmten Wandstruktur erforderliche Heißfluidstrom durch Abzapfung von Brenngas aus der Brennkammer in der Nähe des Einspritzkopfes und/oder durch Verwendung mindestens eines Teilstromes des Abgases der die Treibstoffpumpen antreibenden Turbine(n) oder durch Verwendung eines als Kühlmittel benutzten, durch Wärmetausch stark erhitzten, unverbrannten Treibstoffstromes (ṁ₃) bereitgestellt wird.

3. Wandstruktur zur Durchführung des Verfahrens nach Anspruch 1, mit einer dünnen, heißgasbeaufschlagten Innenwand, mit einer dickeren Außenwand sowie mit einer Vielzahl von die Innen- mit der Außenwand verbindenden Stegen, wobei die Innen-, die Außenwand und die Stege eine Hohlstruktur mit einer Vielzahl von seitlich aneinandergrenzenden Kühlkanälen bilden, dadurch gekennzeichnet, daß in Abstand zur Außenwand (3) ein zusätzlicher Deckmantel (6) angeordnet ist, daß zwischen Außenwand (3) und Deckmantel (6) eine Vielzahl von Stegen (7) angeordnet ist, und daß die Außenwand (3), der Deckmantel (6) und die Stege (7) eine Hohlstruktur mit einer Vielzahl von Heizkanälen (8) zur Führung eines Heißfluidstromes bilden.

4. Wandstruktur nach Anspruch 3, dadurch gekennzeichnet, daß die von der Außenwand (3) zum Deckmantel (6) reichenden Stege (7) integral mit der Außenwand (3) ausgeführt sind und aus dem selben niedrig-wärmeleitenden Werkstoff, wie Nickel oder Stahl bestehen, und daß der Deckmantel (6) ebenfalls aus niedrig-wärmeleitendem, hochfestem Werkstoff, z.B. Nickel oder Stahl, besteht.

5. Wandstruktur nach Anspruch 4, dadurch gekennzeichnet, daß der Deckmantel (6) beispielsweise galvanisch oder mittels Flammspritzen gefertigt oder als mehrteilige Blechschale ausgeführt ist.
